# EUROPÄISCHE PATENTSCHRIFT

(11) **EP 0 567 787 B1**
(45) Veröffentlichungstag und Bekanntmachung des Hinweises auf die Patenterteilung: **25.06.1997**
(21) Anmeldenummer: 93105087.6
(22) Anmeldetag: 27.03.1993
(51) Int. Cl.: F16K 31/16

(54) **Stellventil**
Control valve
Soupage de réglage

(30) Priorität: 28.04.1992 DE 4213957
(43) Veröffentlichungstag der Anmeldung: 03.11.1993
(73) Patentinhaber: Fisher-Gulde Regelarmaturen GmbH & Co. KG., D-67071 Ludwigshafen (DE)
(72) Erfinder:
(74) Vertreter: Klose, Hans, Dipl.-Phys.

(56) Entgegenhaltungen:
- GB-A- 553 373
- US-A- 1 975 656
- US-A- 2 680 451
- US-A- 2 716 394
- US-A- 3 151 531
- US-A- 4 069 839

## Beschreibung

Die Erfindung bezieht sich auf ein Stellventil mit einem insbesondere pneumatisch betätigbaren Stellantrieb gemäß den im Oberbegriff des Patentanspruchs 1 angegebenen Merkmalen.

Ein derartiges Stellventil ist aus der US-A-4 069 839 bekannt, welches zur Regelung eines Gasdrucks vorgesehen ist. Das Ventilgehäuse ist mit einer Druckkammer verbunden, welche von dem in Strömungsrichtung hinter dem Ventil anstehenden Gasdruck beaufschlagt wird. In die Druckkammer ragt ein Bolzen eines Stellantriebs, dessen andere Kammer mittels einer Membrane von der Druckkammer in bekannter Weise getrennt ist. Innerhalb der Druckkammer ist der genannte Bolzen über einen Hebel mit der Ventilspindel gekoppelt. In der anderen Kammer des Stellantriebs ist eine Feder angeordnet, deren Federkraft durch Verstellen eines Gewindebolzens vorgebbar ist, um so einen Sollwert des Gasdrucks in Strömungsrichtung hinter dem Ventil einzustellen.

Ferner ist aus der US-A-4 343 224 ein Stellventil mit einem Membranantrieb bekannt, dessen Membrane koaxial zur axial verschiebbaren Ventilspindel angeordnet und unmittelbar mit dieser gekoppelt ist. Seitlich eines Joches ist ein Stellungsregler angeordnet, welcher über einen Hebel den Hub der Ventilspindel abgreift. Das Bauvolumen sowie die Bauhöhe sind vergleichsweise groß, und zwar vor allem aufgrund der offenen Adaption des Membranantriebs mit dem Ventilgehäuse und aufgrund des frei zugänglichen Abgriffs der Spindelstellung über den Hebel des Stellungsreglers. Diese offene Bauweise kann in der Praxis zu Schwierigkeiten führen, insbesondere durch Aufbringen von Schutzanstrichen und durch unbeabsichtige Dejustierungen.

Aus der US-PS 2 895 501 ist ein Druckregler mit integriertem Membranantrieb bekannt, welcher insbesondere in Gasleitungen für Öfen oder Durchlauferhitzer eingesetzt werden kann. Die eine Kammer des Membranantriebs wird bei geöffnetem Ventil von dem durch dieses strömende Medium beaufschlagt, während die andere Kammer insbesondere vom Druck des zu erwärmenden Wassers zum Öffnen des Ventils beaufschlagbar ist. Der Membranantrieb verstellt über einen Hebel den Ventilkörper entsprechend dem sich einstellenden Gleichgewicht der Kräfte an der Membran. Druckänderungen in den Kammern entsprechend dem momentanen Druck des Gases sowie des Wassers bewirken unmittelbar eine Änderung der Stellung des Ventilkörpers und eine exakte Vorgabe des Durchflußquerschnittes durch das Ventil ist nicht ohne weiteres möglich.

Ferner ist aus der deutschen Offenlegungsschrift 21 49 915 ein Strömungsregler bekannt, welcher in einer nach außen abgedichteten Kammer einen Hebel aufweist, welcher zwischen einen elektromagnetischen Stellantrieb und ein Ventil geschaltet ist. Der Stellantrieb enthält einen Bolzen, welcher mit einer halbkugelförmig ausgebildeten Spitze an einer Seite des Hebels anliegt. An der anderen Seite des Hebels liegt die Ventilspindel gleichfalls mit einer abgerundeten Spitze an, wobei mittels einer Feder die Anlage am Hebel gewährleistet ist. Ein Abgriff für die axiale Stellung der Ventilspindel und ein Stellungsregler sind nicht vorhanden. Da der Bolzen des Stellantriebs und ebenso die Ventilspindel an dem Hebel nur anliegen sind zusätzliche Maßnahmen notwendig, damit beispielsweise bei einer vom Hebel weggerichteten Bewegung des Bolzens dessen Anlage am Hebel sichergestellt ist.

Schließlich ist aus der US-PS 2 657 710 eine Vorrichtung zur Betätigung eines Ventils bekannt. Der Ventilkörper ist Bestandteil eines Kolbens, welcher in einem Zylinder axial verschiebbar ist und von einer Feder beaufschlagt ist. Die Feder ist in einer Kammer des Zylinders angeordnet und diese Kammer steht mit einem Entlüftungsventil in Verbindung. Das Entlüftungsventil ist mittels eines elektromagnetischen Antriebs und einem Hebel betätigbar, wobei mittels Schrauben und Federn eine Begrenzung des Verstellweges vorgegeben wird. Die Stellung des in den Kolben integrierten Ventilkörpers kann nicht definiert vorgegeben werden, zumal das derart ausgebildete Ventil entweder vollständig geöffnet ist oder vollständig absperrt, wobei definierte Zwischenstellungen nicht ohne weiteres vorgebbar sind.

Davon ausgehend liegt der Erfindung die Aufgabe zugrunde, ein Stellventil mit Stellantrieb der genannten Art dahingehend weiterzubilden, daß eine kompakte und gekapselte Bauform, bei wirtschaftlicher Fertigung und Montage erreicht werden. Es soll eine problemlose und zuverlässige Stellungsregler-Adaption gewährleistet sein, wobei nachteilige Auswirkungen von äußeren Einflüssen weitgehend vermieden werden sollen. Es soll bei funktionssicherer Bauweise eine hohe Genauigkeit und eine hohe Lebensdauer gewährleistet sein.

Die Lösung dieser Aufgabe erfolgt gemäß den im kennzeichnenden Teil des Patentanspruchs 1 angegebenen Merkmalen.

Das vorgeschlagene Ventil mit dem integrierten Stellantrieb und Stellungsregler weist einen kompakten Aufbau und ein geringes Bauvolumen auf. Aufgrund des zwischen Ventilspindel und dem Stellantrieb, welcher insbesondere als Membranantrieb ausgebildet ist, geschalteten Hebels können große Kräfte mit einem vergleichsweise kleinen Stellantrieb bzw. mit kleinen Membranen realisiert werden. Der Antrieb weist eine hohe Genauigkeit und Lebensdauer auf, wobei eine wirtschaftliche Herstellung und Montage sichergestellt ist. Das vorgeschlagene Stellventil weist ein großes Stellverhältnis und eine hohe Stellgenauigkeit auf, wobei in kompakter und wirtschaftlicher Bauweise ein Stellverhältnis bis 1:100 funktionssicher realisiert wird. In zweckmäßiger Weise weist der Stellantrieb keine separate Führung auf, so daß eine geringe Reibung gewährleistet ist. Zwischen dem Hebel und der Ventilspindel sind Führungselemente derart angeordnet, daß über den Hebel auf die Ventilspindel im wesentlichen nur axiale Kräfte zu deren Verstellung einwirken. Hierdurch werden Querkräfte von der Ventilspindel ferngehalten, so daß die Dichtungen zur Durchführung der Ventilspindel in das Ventilgehäuse nicht zusätzlich belastet werden und eine hohe Lebensdauer und Funktionssicherheit gewährleistet wird. Des weiteren kann zwischen dem Hebel und der Ventilspindel eine Ausgleichskupplung angeordnet sein, mittels welcher bei der Montage ein Versatz zwischen den Führungselementen und der Ventilspindel ausgleichbar ist. Der Fertigungs- und Montageaufwand wird reduziert, da über die Führungselemente und/oder die Kupplung problemlos ein Ausgleich von Fertigungstoleranzen oder Ausrichtfehler zwischen dem Hebelgehäuse und dem Ventilgehäuse erfolgt und vor allem quer zur Bewegungsrichtung der axialbewegbaren Ventilspindel gerichtete zumindest erheblich reduziert und letztendlich vermieden werden. Aufgrund der Hebelübersetzung kann die im Stellantrieb enthaltene Feder eine erheblich geringere Steifigkeit aufweisen, zumal das Quadrat des Übersetzungsverhältnisses für die Steifigkeit der Feder zu berücksichtigen ist. Durch die im Vergleich mit einer direkten Spindelbetätigung erheblich weichere Feder des Stellantriebs, der insbesondere als Membranantrieb ausgebildet ist, werden Querkräfte praktisch vermieden. Die Invertierung der Wirkungsweise kann problemlos durchgeführt werden, indem lediglich die Lagerung des genannten Hebels verändert wird.

Der Hebel ist in einem geschlossenen Gehäuse gelagert, welches die Verbindung vom Ventilgehäuse und dem Stellantrieb bildet. Das den Hebel enthaltende Gehäuse, welches nachfolgend als Hebelgehäuse bezeichnet wird, enthält ferner die Verbindungsmittel zum Anschluß an das Oberteil des Ventilgehäuses sowie in zweckmäßiger Weise eine Spindel-Kupplung zur Aufnahme von Querkräften. Das Hebelgehäuse enthält für den Hebel eine gekapselte Kammer, welche im wesentlichen quer zur Achse der Ventilspindel sowie der Achse des Stellantriebs liegt, wobei diese Achsen in zweckmäßiger Weise parallel und beabstandet zueinander angeordnet sind. Das Hebelgehäuse enthält eine weitere, im wesentlichen parallel zur Ventilspindel ausgerichtete Kammer, in welcher die Ventilspindel und ggfs. Teile einer Führungseinrichtung und Kupplung mit dem Hebel angeordnet sind. Insgesamt weist das Hebelgehäuse mit den beiden Kammern eine L-artige Kontur auf und ist zumindest für kleinere Ventilgrößen, und zwar bis zu Nennweiten DN 50, einteilig ausgebildet. Für größere Nennweiten kann das Hebelgehäuse auch aus zwei Teilen aufgebaut sein, welche jeweils eine der genannten Kammern enthalten und lösbar miteinander verbunden sind.

An dem Hebelgehäuse ist ferner der Stellungsregler unmittelbar befestigt, wobei der Hubabgriff über den Hebel und/oder dessen Drehachse erfolgt. Es ist eine integrierte Stellungsregler-Adaption mit einem mittelbaren Hubabgriff der Stellung der Ventilspindel vorhanden, wobei das Gehäuse mit dem Hebel zweckmäßig einen Anschluß für die Überströmnluft des Stellungsreglers aufweist. Der Stellungsregler ist auf einer Seite des Hebelgehäuses angeordnet und schließt dort das Hebelgehäuse dicht ab. Ferner wird ein zusätzlicher Schutz gegen atmosphärische Einflüsse der Bauteile auf der drucklosen Seite des Stellantriebes sowie im Hebelgehäuse mittels der Überströmluft des Stellungsreglers gewährleistet. In zweckmäßiger Weise sind alle Innenräume des Stellantriebs und der den Hebel aufweisenden Kammer des Hebelgehäuses gegen Außenluft geschützt, wodurch erhebliche Vorteile hinsichtlich Funktionssicherheit und Lebensdauer erreicht werden.

In einer zweckmäßigen Ausgestaltung ist das Stellventil mit einer an sich bekannten Faltenbalgdichtung versehen. Da die Länge einer Faltenbalgdichtung praktisch proportional dem Hub der Ventilspindel ist, wird durch die vorgeschlagene Kombination mit der Hebelübersetzung und der dadurch bedingten Verkürzung des Hubs auch die Faltenbalglänge entsprechend reduziert. Somit kann das den Faltenbalg zweckmäßig enthaltende Oberteil und insgesamt die Bauhöhe entsprechend dem Übersetzungsverhältnis reduziert werden. Es ist damit ein preisgünstiges Faltenbalgventil geschaffen, welches den Sicherheitsanforderungen, insbesondere gemäß der deutschen Verordnung TA-LUFT oder vergleichbaren im Ausland geltenden Vorschriften, entspricht. Gleichwohl wird aufgrund der Hebelübersetzung eine hohe Stellgenauigkeit gewährleistet, zumal der Stellungsregler in zweckmäßiger Weise auf der Seite des Stellantriebs angekoppelt ist, welcher unter Berücksichtigung der Hebelübersetzung einen größeren Stellweg als die Ventilspindel ausführt.

Weiterbildungen und besondere Ausgestaltungen der Erfindung sind in den Unteransprüchen angegeben und werden nachfolgend im einzelnen beschrieben.

Die Erfindung wird anhand der in der Zeichnung dargestellten besonderen Ausführungsbeispiele näher erläutert, ohne daß insoweit eine Einschränkung der Erfindung erfolgt. Es zeigen:
- Fig. 1: einen Längsschnitt durch das Ventil, das Hebelgehäuse und den Membranantrieb,
- Fig.2: vergrößert einen Schnitt entang Schnittlinie II gemäß Fig. 1,
- Fig. 3: vergrößert den Ausschnitt III gemäß Fig. 1,
- Fig. 4: teilweise eine Ansicht in Richtung IV gemäß Fig. 1,
- Fig. 5: vergrößert den Ausschnitt V gemäß Fig. 1,
- Fig. 6: einen Längsschnitt durch ein bekanntes geschmiedetes Ventilgehäuse,
- Fig. 7, 8: einen Längsschnitt bzw. eine Aufsicht auf das erfindungsgemäße Ventilgehäuse.

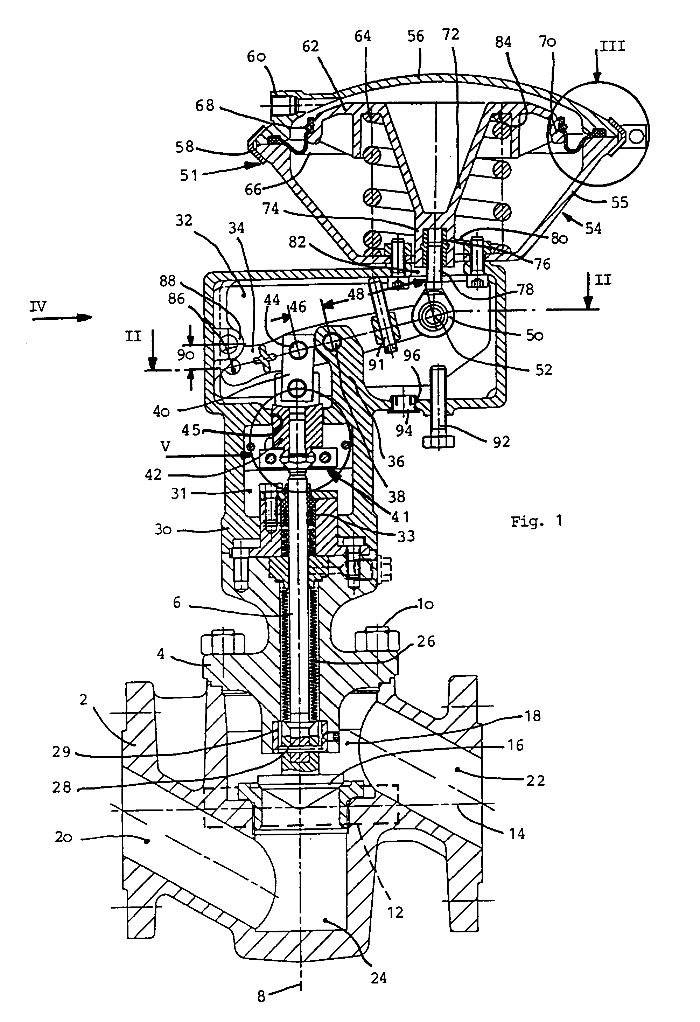

Fig. 1 zeigt in einem Längsschnitt ein geschmiedetes Ventilgehäuse 2 mit einem Oberteil 4, in welchem eine Ventilspindel 6 in Richtung einer Spindelachse 8 axial bewegbar angeordnet ist. Das Oberteil 4 ist mittels Gewindebolzen 10 mit einem Gehäuseflansch 12 verbunden, welcher etwa in der Mitte des Gehäuses 2 angeordnet ist und durch welchen die Längsachse 14 verläuft. Innen weist das Ventilgehäuse 2, und zwar in Strömungsrichtung hinter dem Ventilkegel 16, eine Entspannungskammer 18 mit einem großen Volumen auf. Durch diese große Entspannungskammer werden besonders günstige strömungstechnische Kenngrößen realisiert. Die beim Schmiedevorgang verfügbare Umformenergie wird in die Herstellung der großen Entspannungskammer 18 gelegt, während die Einlaßöffnung 20 und die Auslaßöffnung 22 durch Bohren hergestellt werden. Die koaxial zur Entspannungskammer 18 am Ende der Einlaßöffnung 20 liegende Verbindungskammer 24 kann beim Schmiedevorgang und/oder durch Bohren hergestellt werden.

Das Ventiloberteil 4 enthält zur Spindelabdichtung einen Faltenbalg 26. Da die Ventilspindel 6 aufgrund der noch zu erläuternden Hebelübersetzung einen kleinen Hub ausführt, weist der Faltenbalg eine vergleichsweise geringe Länge in Richtung der Ventilachse 8 auf. Damit weist das Ventiloberteil und insgesamt das Stellventil eine im Vergleich mit bekannten direkt angetriebenen Faltenbalgventilen eine erheblich reduzierte Bauhöhe auf. Bevorzugt ist ferner für die Ventilspindel 6 eine Drehsicherung vorgesehen. Hierfür ist ein Stift 28, welcher zur Verbindung der Ventilspindel 6 mit dem Ventilkegel 16 vorgesehen ist, mit seinen beiden Enden in Längsnuten 29 bezüglich des Oberteils 4 geführt. Aufgrund dieser Drehsicherung werden Torsionskräfte vom Faltenbalg ferngehalten, wodurch dessen Lebensdauer und Funktionssicherheit günstig beeinflußt werden. Obgleich mittels der Faltenbalgdichtung den Sicherheitsvorschriften, insbesondere der TA-LUFT, in besonders zweckmäßiger Weise entsprochen wird, kann für geringere Anforderungen auch eine andere Dichtung, beispielsweise eine konventionelle Packung oder ein O-Dichtring zur Spindelabdichtung vorgesehen sein, wobei für derartige Ausgestaltungen die Baulänge des Oberteils 4 und somit des gesamten Stellventils noch weiter reduziert werden kann.

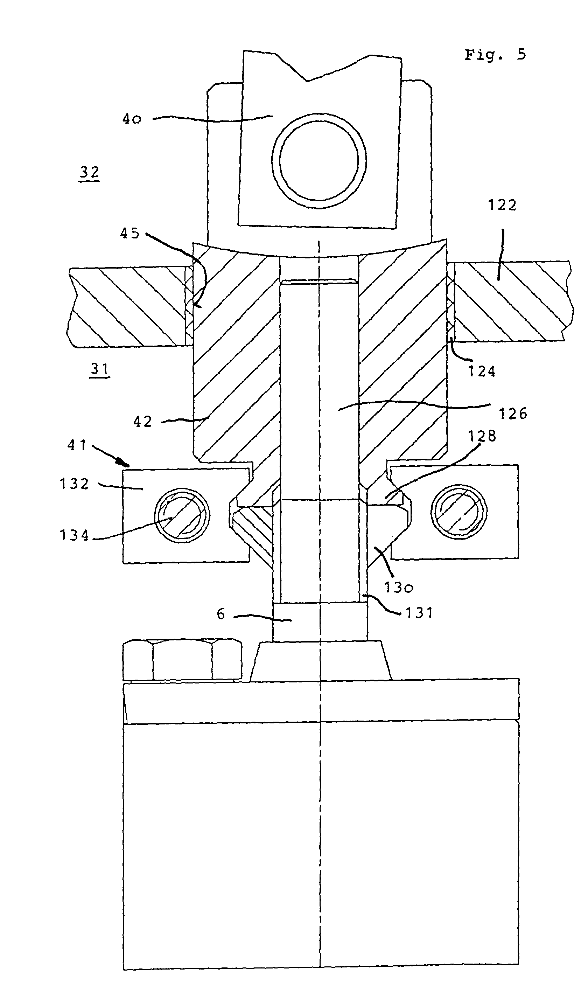

Mit dem Ventiloberteil 4 ist ein Hebelgehäuse 30 fest verbunden, welches eine zur Spindelachse 8 koaxiale erste Kammer 31 sowie eine querliegende zweite Kammer 32 enthält. Am unteren Ende der ersten Kammer 31 ist eine Sicherheitsabdichtung 33 vorgesehen. Es ist hier eine Sicherheitsabdichtung 33 mit angefederten Dachmanschetten dargestellt, welche einen großen Anteil in der Vielfalt unterschiedlicher Packungsarten besitzen. Eine derartige Ausführung ist grundsätzlich recht zuverlässig, solange keine Querkräfte in den Dachmanschetten auftreten. Weiter unten werden anhand von Fig. 5 zweckmäßige Maßnahmen zur Vermeidung von Querkräften näher erläutert. In der zweiten gekapselten Kammer 32 ist ein Hebel 34 auf einem Lagerbock 36 um eine Achse 38 schwenkbar gelagert. Der Lagerbock 36 ist in zweckmäßiger Weise gabelförmig ausgebildet, wobei zwischen zwei quer zur Zeichenebene beabstandet angeordneten Armen der Hebel 34 angeordnet ist. Über ein Gelenkteil 40 und eine Kupplung 41 mit einem Führungskörper 42 erfolgt die Verbindung und Anlenkung der Ventilspindel 6 an den Hebel 34, wobei zwischen der Anlenkachse 44 und der Drehachse 38 ein erster Abstand oder Hebelarm 46 vorhanden ist. Dem Führungskörper 42 sind Führungsflächen 45 im Hebelgehäuse 30 zugeordnet. Durch die derart ausgebildeten Führungselemente wird gewährleistet, daß von der angekoppelten Ventilspindel Querkräfte ferngehalten werden und vom Hebel auf die Ventilspindel im wesentlichen nur axiale Kräfte ausgeübt werden. Mittels der Kupplung 41 wird ein eventueller Achsversatz zwischen den hier als Führungskörper 42 und Führungsflächen ausgebildeten Führungselementen und der Ventilspindel 6 ausgeglichen, so daß selbst bei nicht exakt koaxialer Ausrichtung der Führungselemente und der Ventilspindel 6 auf diese keine Biegemomente oder Querkräfte einwirken.

Die Führungselemente, insbesondere der Führungskörper 42 und die Führungsfläche 45, sind in zweckmäßiger Weise im Bereich der Zwischenwand zwischen den beiden Kammern 31 und 32 angeordnet. So wird gleichzeitig eine Abdichtung der gekapselten Kammer 32 zumindest insoweit gewährleistet, daß keine Fremdkörper in die Kammer 32 gelangen können. Vom Stellungsregler ggfs. in die gekapselte Kammer 32 einströmende Abluft kann jedoch entweichen. Es versteht sich, daß im Rahmen der Erfindung die Führungsmittel abweichend hiervon nicht zwischen den beiden Kammern, sondern wahlweise gänzlich in der einen oder in der anderen Kammer angeordnet sein können, wobei zwischen den beiden Kammern 31 und 32 bevorzugt Dichtelemente in Form von Dichtringen oder dergleichen angeordnet sind.

Am anderen, hier rechten Ende des Hebels 34 ist in einem zweiten Abstand 48 ein Gelenkkörper 50 um eine Welle 52 drehbar angeordnet. Über den Gelenkkörper 50 dieses Gabelgelenks erfolgt die Verbindung mit dem Stellantrieb 51, welcher hier bevorzugt als Membranantrieb ausgebildet ist. Der zweite Abstand 48 ist ersichtlich größer als der erste Abstand 46 und folglich werden mittels dieser zweckmäßigen Hebelübertragung große Kräfte auf die Ventilspindel 6 mit einem vergleichsweise kleinen Stellantrieb 51 ausgeübt.

Entsprechend dem Hebel-Übertragungsverhältnis wird vor allem der Durchmesser der Membran und somit des Membrangehäuses 54 wesentlich reduziert. Das Membrangehäuse 54 weist einen unteren Gehäuseteil 55 und einen oberen Gehäuseteil 56 auf, welche mittels eines Spannbandes 58 dicht miteinander verbunden sind. Das obere Gehäuseteil 56 enthält einen Anschluß 60 für Druckmittel, wobei im Inneren ein Membran-Federteller 62 mittels einer Druckfeder 64 abgestützt ist. Die Feder 64 weist, unter Berücksichtigung des Hebel-Übersetzungsverhältnisses, eine vergleichsweise geringe Federsteifigkeit auf. Hierdurch werden in besonders zweckmäßiger Weise Querkräfte weitgehend vermieden. Besondere Maßnahmen zur Führung des bewegbaren Antriebteils, des Stellantriebs 51, sind daher nicht erforderlich und nachteilige Einflüsse infolge von Reibung werden vermieden. Durch den insgesamt reibungsarmen Schwenkantrieb wird eine wesentlich verminderte Hysterese erreicht. Eine ringförmige Membrane 66 ist radial außen zwischen die beiden Gehäuseteile 55 und 56 eingespannt und radial innen mittels eines Ringes 68 am Außenrand 70 des Membrantellers 62 festgelegt. Der Ring 68 weist eine hohe Dehnsteifigkeit auf und ist insbesondere als ein Stahlring ausgebildet. Dieser Ring 68 mit hoher Dehnsteifigkeit ermöglicht eine zuverlässige Fixierung der Membrane 66 am Rand des Tellers 62. Aufgrund dieser besonderen Konstruktion ist eine einfache Montage bzw. Demontage ermöglicht, wobei keine Sicherheitsbauteile erforderlich sind. Es ist eine einfache und zuverlässige Membranbefestigung vorhanden, wobei anstelle des hier dargestellten Stahlringes 68 ein in den Innenrand der Membran eingebetteter Draht oder Drähte vorgesehen werden können.

Der Membran-Federteller 62 enthält ein von der Feder 64 umgebenes Innenteil 72, in dessen unteren Ende 74 mittels einer Gewindehülse 76 der Gelenkkörper 50 des Gabelgelenks mit einem Außengewinde 78 eingeschraubt ist. Die Abstützung und Führung des Membran-Federtellers 62 erfolgt somit über den Hebel 34, wobei ein Ringspalt 80 eine hinreichende Querbeweglichkeit des Endes 74 des Innenteils 72 bezüglich der Bodenöffnung des unteren Gehäuseteils 55 sowie einer Öffnung 82 des Hebelgehäuses 30 ermöglicht. Wie nachfolgend noch zu erläutern ist, ist am Hebelgehäuse 30 der Stellungsregler unmittelbar angeordnet, dessen Überströmluft in die gekapselte zweite Kammer 32 geleitet wird. Mittels des derart integrierten Stellungsreglers wird in besonders zweckmäßiger Weise ein zusätzlicher Schutz gegen atmosphärische Einflüsse der in der zweiten, gekapselten Kammer 32 angeordneten Bauteile durch die Überströmluft des Stellungsreglers gewährleistet. Aus der zweiten Kammer 32 gelangt die Überströmluft ferner durch den Ringspalt 80 zur drucklosen Seite des Membranantriebs, so daß die dort befindlichen Bauteile gleichfalls gegen atmosphärische Einflüsse und damit verbundene Korrosion geschützt sind.

Das Membrangehäuse 54 mit den Gehäuseteilen 55 und 56 sowie der Membran-Federteller 62 können aus metallischen Werkstoffen ebenso hergestellt sein wie aus nichtmetallischen Werkstoffen, wie insbesondere GFK. Wichtig sind insoweit die vergleichsweise kleinen Durchmesser, wobei aufgrund der Hebelübersetzung gleichwohl die erforderlichen Stellkräfte auf die Ventilspindel 6 übertragbar sind. Die Membran 66 ist in bezug auf die untere Anlagefläche 84 des Membran-Federtellers 62 für die Druckfeder 64 vergleichsweise tief bzw. axial beabstandet angeordnet. Somit ist für die Membran eine über den Hub des Membran-Federtellers 62 weitgehend gleichbleibende wirksame Fläche vorhanden, und zwar in bezug auf die hinsichtlich der Auflagefläche 84 der Feder 64 tiefliegende Stellkraft der Membran 66.

Auf der Druckmittelseite des Membran-Federtellers sind keine Führungen vorhanden, während die auf der druckmittelfreien Seite, also im Bereich des unteren Gehäuseteils 56 befindlichen Bauteile aufgrund der auch dorthin gelangenden Überströmluft vor nachteiligen Einwirkungen, insbesondere einer korrosiven Atmosphäre, funktionssicher geschützt sind.

Der Hebel 34 weist gemäß der Zeichnung links eine freie Bohrung 86 auf, während das Hebelgehäuse 30 einen zweiten Lagerbock 88 in der Kammer 32 besitzt. Wie ersichtlich, weist die freie Bohrung 86 zum zweiten Lagerbock 88 in Richtung der Spindelachse 8 einen Abstand 90 auf. Auch dieser zweite Lagerbock 88 ist ebenso wie der erste Lagerbock 36 als Gabel ausgebildet, zwischen deren beiden Armen das Ende des Hebels 34 mit der Bohrung 86 angeordnet werden kann. Zur Invertierung der Wirkungsrichtung kann der Hebel 34 statt an dem ersten Lagerbock 36 an dem zweiten Lagerbock 88 mittels einer Achse schwenkbar befestigt sein. Entsprechend dem genannten Abstand 90 ist dann in drucklosem Zustand die Ventilspindel 6 mit dem Ventilkegel 16 angehoben, so daß bei Druckbeaufschlagung das Stellventil schließt. Durch diese besondere Ausgestaltung kann somit ohne Zerlegung des Membrangehäuses in einfacher Weise die Wirkungsrichtung invertiert werden. Auch bei Anlenkung des Hebels 34 am zweiten gabelförmigen Lagerbock 88 ist der Hebelarm der Anlenkung der Ventilspindel 6 ersichtlich wesentlich kleiner als der Hebelarm der Anlenkung des Gelenkkörpers 50.

Ferner sind zwei Einstellschrauben 91, 92 vorgesehen. Mittels der im Hebel 34 über Gewinde drehbaren ersten Einstellschraube 91 erfolgt eine obere Hubbegrenzung während mittels der im Gehäuse 30 drehbaren zweiten Einstellschraube 92 eine untere Hubbegrenzung des Hebels 34 und somit der Ventilspindel 6 vorgebbar ist. Es sind somit integrierte Einstellmöglichkeiten als Minimal- und Maximalbegrenzungen zur Mengenbegrenzung des Stellventils ohne besonderen Bauaufwand realisiert. Die zweite Kammer 32 des Hebelgehäuses 30 enthält eine Entlüftungsvorrichtung 94. Diese Entlüftungsvorrichtung 94 ist in einer Bohrung 96 des Hebelgehäuses 30 eingesetzt und ermöglicht das Abströmen der in die zweite Kammer eingeleiteten Überströmluft des Stellungsreglers. Die Bohrung 96 ist zweckmäßig derart bezüglich der ersten Einstellschraube 91 angeordnet, daß nach dem Entfernen der einen Kunststoffstopfen enthaltenden Entlüftungsvorrichtung 94 ein Schraubenzieher durch die Bohrung 96 zum Betätigen der Einstellschraube 91 durchführbar ist.

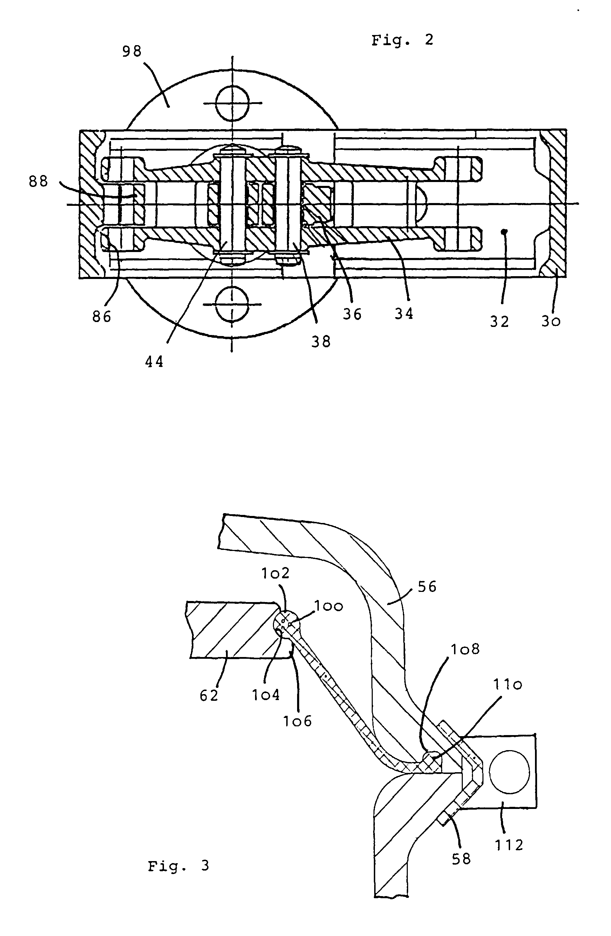

Fig. 2 zeigt einen Schnitt durch die Kammer 32 des Hebelgehäuses 30, und zwar ohne den Gelenkkörper des Gabelgelenks. Zwischen den beiden zueinander parallelen Teilen des doppelarmigen Hebels 34 sind der erste Lagerbock 36, das Gelenkteil 40 sowie die dazugehörenden Achsen 38 bzw. 44 gut zu erkennen. Durch Umsetzen der Achse 38 in den zweiten Lagerbock 88 sowie die freie Bohrungen 86 des Hebels 34 erfolgt die bereits erläuterte Invertierung der Wirkungsrichtung. Das Hebelgehäuse 30 enthält unten einen Flansch 98, über welchen die Verbindung mit dem Ventiloberteil erfolgt.

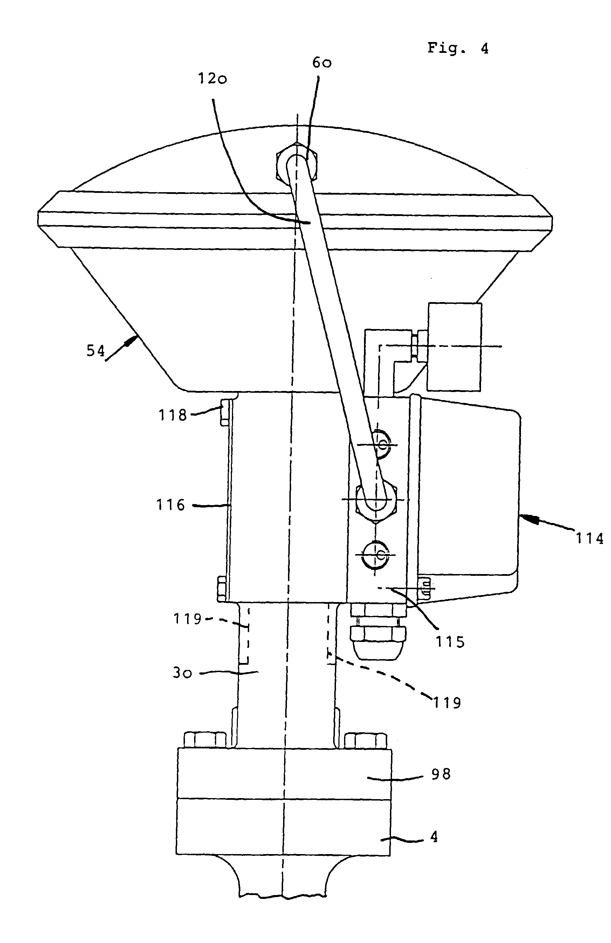

Fig. 3 zeigt vergrößert eine weitere Ausgestaltung der Membrane 66 und deren Befestigung am Membran-Federteller 62. Anstelle des eingangs erläuterten Stahlringes sind einzelne Drähte 100 in Umfangsrichtung in den Rand 102 der Membran 66 integriert. Der Rand 102 ist zweckmäßig als ein Ringwulst ausgebildet, welcher in eine radial nach außen sich öffnende Ringnut 104 des Tellers 62 eingreift. Wie ersichtlich, weist der Membran-Federteller 62 auf der drucklosen Seite eine Nase 106 auf, welche einen funktionssicheren Sitz gewährleistet. Wird in die Kammer zwischen dem oberen Gehäuseteil 56 und der Membran 66 Druckmittel eingeleitet, so wird der Membranrand 102 funktionssicher gegen die radial nach außen vorstehende Nase 106 gedrückt. Der Außendurchmesser der Nase 106 sowie der Durchmesser der genannten Drähte 100 sind aufeinander abgestimmt, um einen zuverlässigen und dichten Sitz sicherzustellen. Entsprechendes gilt auch für die anhand von Fig. 1 dargestellte Ausführungsform hinsichtlich des dort vorgesehenen Stahlringes und der gleichfalls vorhandenen radial nach außen gerichteten Nase des Membran-Federtellers. Zur Festlegung des äußeren Randes der Membran 66 weist das obere Gehäuseteil 56 eine Ringnut 108 auf, in welche ein radial außen angeordneter Ringwulst 110 der Membrane 66 eingreift. Auch ist hier ein Spannschloß 112 für das Spannband 58 gut zu erkennen. Die Montage und ggfs. Demontage des Membranantriebs kann problemlos durchgeführt werden, ohne daß hierzu besondere Werkzeuge oder gar Hilfseinrichtungen notwendig sind.

Fig. 4 zeigt eine seitliche Ansicht des Gehäuses 54 des Stellantriebs 51 und des Hebelgehäuses 30, an welches der Stellungsregler 114 unmittelbar in besonders kompakter Bauweise adaptiert ist. Der Stellungsregler 114 besitzt eine Platte 115, welche dicht mit dem Hebelgehäuse 30 verbunden ist. Der elektropneumatische oder pneumatische Stellungsregler 114 schließt die zweite Kammer des Hebelgehäuses 30 auf der einen Seite dicht ab. Gegenüber auf der anderen Seite ist ein Deckel 116 vorgesehen, der mit Schrauben 118 befestigt ist. Mit hier nicht weiter dargestellten Dichtungen kann ggfs. eine gute Abdichtung der gekapselten zweiten Kammer des Hebelgehäuses 30 gewährleistet werden. Durch Abnahme des Deckels 116 ist die zweite Kammer leicht zugänglich, um beispielsweise durch Umsetzung der Hebellagerung die Invertierung der Wirkungsrichtung zu ermöglichen. Des weiteren erfolgt in der zweiten Kammer mittelbar am Hebel der Hubabgriff der Ventilspindel. Die erste Kammer des Hebelgehäuses 30 ist hingegen nicht gekapselt sondern teilweise offen. Auf beiden Seiten der Kammer ist jeweils ein Abdeckblech 119 vorgesehen. Diese Abdeckbleche 119 erstrecken sich nur über einen Teil der Gesamthöhe der ersten Kammer. Die Größe bzw. Höhe der Abdeckbleche 119 wird zur Vermeidung von Unfallgefahren derart vorgegeben, daß insbesondere das Einführen eines Fingers in die erste Kammer praktisch ausgeschlossen ist.

Über eine Leitung 120 erfolgt die Verbindung zwischen dem Stellungsregler 114 und dem Membranantrieb 54, wobei die Leitung 120 in bekannter Weise an dem Anschluß 60 dicht angeschlossen ist. Wie ersichtlich, ist über den Flansch 98 die Verbindung mit dem Ventiloberteil 4 hergestellt. Aufgrund der unmittelbaren Adaption des Stellungsreglers 114 am Hebelgehäuse 30, und zwar insbesondere direkt im Bereich der gekapselten zweiten Kammer, kann problemlos dessen Überströmluft in die zweite Kammer zu deren Spülung geleitet werden. Es sei festgehalten, daß insoweit eine Verbindung oder ein Anschluß zwischen den Stellungsregler 114 und dem Hebelgehäuse 30 vorhanden ist. Gegebenenfalls kann die Spülung des Hebelgehäuses sowie der drucklosen Teile des Membranantriebs mittels Stickstoff oder eines Druckmittels erfolgen, wofür problemlos entsprechende Anschlüsse vorgesehen werden können.

Fig. 5 zeigt die besonders zweckmäßige Ankopplung der Ventilspindel 6 mittels des Führungskörpers 42 über den hier nicht dargestellten Hebel an den Membranantrieb. Vom Hebelgehäuse ist hier eine Trennwand 122 zwischen der ersten Kammer 31 und der zweiten Kammer 32 zu erkennen. Die Trennwand 122 enthält eine Bohrung mit einer Führungsbuchse 124 mit der Führungsfläche 45 für den Führungskörper 42. Der Führungskörper 42 weist eine zentrale Bohrung auf, in welche die Ventilspindel 6 mit einem Zapfen 126 eingreift. Der Zapfen 126 ist mit einer genauen Passung in den Führungskörper 42 eingesetzt. Der Führungskörper 42 ist exakt im Hebelgehäuse geführt, und insgesamt werden in zweckmäßiger Weise Querkräfte kompensiert und von der Ventilspindel 6 und der Sicherheitsabdichtung 33 ferngehalten. Der Führungskörper 42 enthält am unteren Ende einen Zentrierkonus 128, welcher mit einer geschlitzten Konusmutter 130 zusammenwirkt. Die Konusmutter 130 ist eine geschlitzte und konisch angedrehte Norm-Mutter, welche auf das Außengewinde 131 der Ventilspindel 6 geschraubt ist. Der Zentrierkonus 128 und die Konusmutter 130 sind mittels zwei Kupplungshälften 132 sowie Schrauben 134 miteinander verspannt, wobei mittels der geschlitzten Konusmutter 130 die Drehsicherung und die axiale Sicherung erfolgt. Im Gegensatz zur zweiten gekapselten Kammer 32 ist die erste Kammer 31 an ihren parallel zur Zeichenebene liegenden Seiten offen, so daß die erläuterte Kupplung 41 leicht eingestellt und überprüft werden kann. Die Kupplung 41 gewährleistet eine hohe Mittengenauigkeit und ist selbstzentrierend, wobei eine einfache Montage und Justage gewährleistet ist. Im Zusammenwirken mit der Passung zwischen dem Zapfen 126 und der zentralen Bohrung des Führungskörpers 42 und ferner dessen Führung im Hebelgehäuse wird eine sehr präzise und querkraftfreie Führung der Spindel 6 sichergestellt.

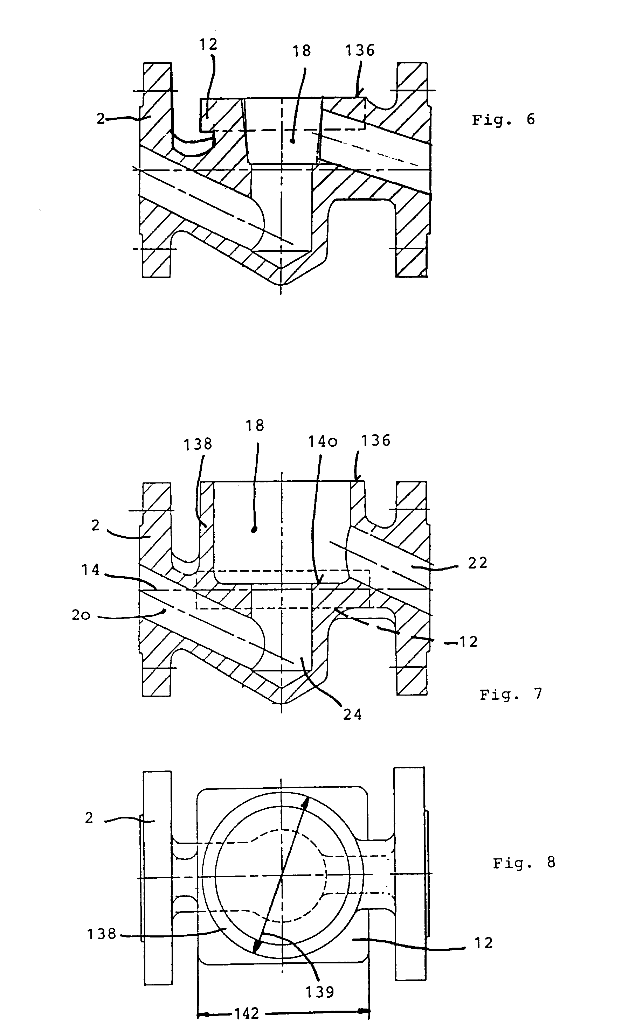

Fig. 6 zeigt ein bekanntes Ventilgehäuse 2 in geschmiedeter Ausführung. Ein derartiges Gehäuse kann aus dem vollen geschmiedet und nachfolgend aufgebohrt sein. Der zum Anschluß des Ventiloberteils erforderliche Gehäuseflansch 12 ist am oberen Gehäuserand 136 angeordnet. Die Entspannungskammer 18 besitzt ein vergleichsweise kleines Volumen, was nachteilig für die strömungstechnischen Kenngrößen ist.

In den Fig. 7 und 8 ist das erfindungsgemäße Ventilgehäuse 2 mit der großen Entspannungskammer 18 dargestellt. Die Entspannungskammer 18 ist von einer im wesentlichen zylindrischen Wand 138 umgeben. Der Gehäuseflansch 12 ist nicht am oberen Rand 136, sondern im Bereich des Bodens 140 der Entspannungskammer 18 angeordnet. Die Wand 138 weist über ihre gesamte Höhe eine weitgehend gleichbleibende Wanddicke auf. Beim Schmieden wird die verfügbare Umform-Energie im wesentlichen zur Herstellung der großen Entspannungskammer genutzt und die Einlaßöffnung 20, die Auslaßöffnung 22 sowie die Verbindungskammer 24 werden durch Bohren nachträglich hergestellt. Aufgrund der Anordnung des Gehäuseflansches 12 in der Mitte des Gehäuses bzw. im Bereich der Längsachse 14 ergeben sich beim Schmieden insoweit keine nachteiligen Einschränkungen. Der Außendurchmesser 139 der Wand 138 ist im wesentlichen gleich groß wie die Länge 142 der Außenkanten des etwa quadratischen Gehäuseflansches 12.

### Bezugszeichenliste

- 2: Ventilgehäuse
- 4: Oberteil
- 6: Ventilspindel
- 8: Spindelachse
- 10: Gewindebolzen
- 12: Gehäuseflansch
- 14: Längsachse
- 16: Ventilkegel
- 18: Entspannungskammer
- 20: Einlaßöffnung
- 22: Auslaßöffnung
- 24: Verbindungskammer
- 26: Faltenbalg
- 28: Stift
- 29: Längsnut
- 30: Hebelgehäuse
- 31, 32: Kammer
- 33: Sicherheitsabdichtung
- 34: Hebel
- 36: Lagerbock
- 38: Achse von 34
- 40: Gelenkteil
- 41: Kupplung
- 42: Führungskörper
- 44: Anlenkachse
- 45: Führungsfläche
- 46, 48: Abstand, Hebelarm
- 50: Gelenkkörper
- 51: Stellantrieb
- 52: Welle von 50
- 54: Gehäuse von 51
- 55, 56: Gehäuseteil
- 58: Spannband
- 60: Anschluß
- 62: Membran-Federteller
- 64: Druckfeder
- 66: Membrane
- 68: Ring
- 70: Außenrand von 62
- 72: Innenteil
- 74: unteres Ende von 72
- 76: Gewindehülse
- 78: Außengewinde von 50
- 80: Ringspalt
- 82: Öffnung in 30
- 84: Anlagefläche
- 86: freie Bohrung in 34
- 88: zweiter Lagerbock
- 90: Abstand
- 91, 92: Einstellschraube
- 94: Entlüftungsvorrichtung
- 96: Bohrung
- 98: Flansch von 32
- 100: Draht
- 102: Rand
- 104: Ringnut
- 106: Nase
- 108: Ringnut
- 110: Ringwulst von 66
- 112: Spannschloß
- 114: Stellungsregler
- 115: Platte von 114
- 116: Deckel
- 118: Schraube
- 119: Abdeckblech
- 120: Leitung
- 122: Trennwand von 30
- 124: Führungsbuchse
- 126: Zapfen von 6
- 128: Zentrierkonus
- 130: Konus-Mutter
- 131: Außengewinde von 6
- 132: Kupplungshälfte
- 134: Schraube
- 136: Gehäuserand
- 138: Wand
- 139: Außendurchmesser
- 140: Boden
- 142: Kantenlänge

## Patentansprüche

1. Stellventil mit einem insbesondere pneumatisch betätigbaren Stellantrieb (51), mittels welchem eine in einem Ventilgehäuse (2) axial bewegbare Ventilspindel (6) betätigbar ist und mit einem Stellungsregler (114), über welchen entsprechend der Stellung der Ventilspindel (6) der Stellantrieb (51) ansteuerbar ist, wobei die Ventilspindel (6) über einen Hebel (34) und einen Gelenkkörper (50) mit dem Stellantrieb (51) gekoppelt ist,
dadurch gekennzeichnet, daß der Hebel (34) in einem Hebelgehäuse (30) schwenkbar gelagert ist,
daß der Stellungsregler (114) am Hebelgehäuse (30) angeordnet ist und daß das Hebelgehäuse (30) einerseits mit dem Ventilgehäuse (2) und andererseits mit dem Gehäuse (54) des Stellantriebs (51) verbunden ist.

2. Stellventil, insbesondere nach Anspruch 1, dadurch gekennzeichnet, daß der Hebel (34) in einer gekapselten Kammer (32) des Hebelgehäuses (30) angeordnet ist und/oder daß in der genannten Kammer (32) zwei Lagerböcke (36, 88) angeordnet sind, in welchen wahlweise entsprechend der vorgebbaren Wirkungsrichtung der Hebel (34) schwenkbar gelagert ist.

3. Stellventil nach Anspruch 1 oder 2, dadurch gekennzeichnet, daß der direkt mit dem Hebelgehäuse (34) verbundene Stellungsregler (114) eine Platte (115) aufweist. welche die zweite Kammer (32) auf der einen Seite dicht abschließt, daß auf der anderen Seite des Hebelgehäuses (30) ein die zweite Kammer (32) gleichfalls dicht abschließender Deckel (116) angeordnet ist und/oder daß ein Hubabgriff der Ventilspindel (6) bevorzugt mittelbar über den Hebel (34) oder dessen Drehachse (38) erfolgt.

4. Stellventil nach Anspruch 3, dadurch gekennzeichnet, daß die Platte (115) einen Anschluß für die überström-Luft des Stellungsreglers (114) enthält, wobei durch diesen Anschluß die Überström-Luft in die gekapselte zweite Kammer (32) sowie den druckmittelfreien Teil des Membranantriebs gelangt.

5. Stellventil nach einem der Ansprüche 1 bis 4, dadurch gekennzeichnet, daß bezogen auf die Drehachse (38) des Hebels (34) der Hebelarm (46) für die Anlenkung der Ventilspindel (6) wesentlich kleiner ist als der Hebelarm (48) für die Anlenkung des mit dem Stellantrieb verbundenen Gelenkkörpers (50) und/oder daß insbesondere dem Hebel (34) zugeordnete und einstellbare Hubbegrenzungen vorgesehen sind, welche bevorzugt als im Hebel (34) oder im Hebelgehäuse (30) drehbar angeordnete Einstellschrauben (91, 92) ausgebildet sind.

6. Stellventil nach einem der Ansprüche 1 bis 5, dadurch gekennzeichnet, daß zwischen dem Hebel (34) und der Ventilspindel (6) Führungselemente (42, 45) und/oder eine Kupplung (31) vorgesehen sind.

7. Stellventil nach einem der Ansprüche 1 bis 6, dadurch gekennzeichnet, daß das Hebelgehäuse (30) eine erste Kammer (31) aufweist, in welche die Ventilspindel (6) teilweise hineinragt und welche zur zweiten Kammer (32) mit einer Trennwand (122) getrennt ist, wobei durch die Trennwand (122) ein sowohl mit der Ventilspindel (6) als auch mit dem Hebel (34) gekoppelter Führungskörper (42) hindurchgeführt ist, welcher in Richtung der Spindelachse (8) bewegbar und quer zur Spindelachse (8) bezüglich des Hebelgehäuses (30) bevorzugt mittels einer Führungsbuchse (124) geführt ist.

8. Stellventil nach einem der Ansprüche 1 bis 7, dadurch gekennzeichnet, daß die Ventilspindel (6), insbesondere mit einem Zapfen (126) und/oder über eine Passung in eine Bohrung des Führungskörpers (42) eingreift und/oder daß der Führungskörper (42) einen Zentrierkonus (128) aufweist, an welchem eine geschlitzte Konusmutter (130) anliegt, wobei letztere auf ein Außengewinde (131) der Ventilspindel (6) geschraubt ist und mit einer Kupplung (132) bezüglich des Zentrierkonus (128) verspannt ist.

9. Stellventil nach einem der Ansprüche 1 bis 8, dadurch gekennzeichnet, daß das Hebelgehäuse (30) mit dem Ventiloberteil (4) direkt verbunden ist, wobei das Hebelgehäuse (30) einen Flansch (98) aufweist und/oder daß das Membrangehäuse (54) ein unteres sowie ein oberes Gehäuseteil (55, 56) enthält, welche mit einem Spannband (58) sowie einem Spannschloß (112) verbunden sind.

10. Stellventil nach einem der Ansprüche 1 bis 9, dadurch gekennzeichnet, daß die Vorspannung der im Membranantrieb enthaltenen Feder (64) derart vorgegeben ist, daß das Öffnen des Membrangehäuses (54) ohne Montage- oder Sicherheitsvorrichtungen durchführbar ist und/oder daß die insbesondere ringförmig ausgebildete Membrane (66) über einen geschlossenen Ring (68), insbesondere mit hoher Dehnsteifigkeit, oder mittels in den Innenrand der Membran integrierte Drähte (100) am Rand des Membran-Federtellers (62) befestigt ist und/oder daß der Membran-Federteller (62) im Außenrand eine Ringnut (104) und/oder eine radial nach außen gerichtete Nase (106) aufweist, welche auf der vom Druckmittel nicht beaufschlagten Seite angeordnet ist.

11. Stellventil nach einem der Ansprüche 1 bis 10, dadurch gekennzeichnet, daß das Ventilgehäuse (2) durch Schmieden hergestellt ist und hinter der Drosselstelle eine Entspannungskammer (18) mit einem großen Volumen aufweist, wobei die Entspannungskammer (18) von einer im wesentlichen zylindrischen Wand (138) umgeben ist, deren Wandstärke über ihre Höhe bis zum Gehäuserand (136) im wesentlichen gleich groß ist.

12. Stellventil nach einem der Ansprüche 1 bis 11, dadurch gekennzeichnet, daß der zur Verbindung des Oberteils (4) vorgesehene Gehäuseflansch (12) vom oberen Gehäuserand (136) beabstandet angeordnet ist und/oder im wesentlichen in der Mitte oder im Bereich der Längsachse (14) des Gehäuses (2) liegt und/oder daß der Außendurchmesser (139) der Wand (138) im wesentlichen gleich groß ist wie die Kantenlänge (142) des im wesentlichen quadratisch ausgebildeten Gehäuseflansches (12).

13. Stellventil nach einem der Ansprüche 1 bis 12, dadurch gekennzeichnet, daß ein Faltenbalg (26) zur Abdichtung der Ventilspindel (6) vorgesehen ist und/oder daß der Faltenbalg (26) in dem Ventiloberteil (4) angeordnet ist, welches in Richtung der Spindelachse (8) eine vergleichsweise geringe Baulänge aufweist.

## Claims

1. A servo valve having an in particular pneumatically actuable servo drive (51) by means of which a valve spindle (6) movable axially within a valve housing (2) is actuable, and having a position controller (114) by way of which the servo drive (51) may be triggered in dependence on the position of the valve spindle (6), the valve spindle (6) being coupled to the servo drive (51) by a lever (34) and a link body (50), characterized in that the lever (34) is pivotally mounted in a lever housing (30), in that the position controller (114) is arranged on the lever housing (30), and in that the lever housing (30) is connected on the one hand to the valve housing (2) and on the other hand to the housing (54) of the servo drive (51).

2. A servo valve, in particular according to Claim 1, characterized in that the lever (34) is arranged in an enclosed chamber (32) of the lever housing (30), and/or in that there are arranged in the said chamber (32) two bearing blocks (36, 88) within which the lever (34) is pivotally mounted, selectively in dependence on the predeterminable direction of operation.

3. A servo valve according to Claim 1 or 2, characterized in that the position controller (114), which is directly connected to the lever housing (34), has a plate (115) which tightly closes the second chamber (32) on the one side, in that on the other side of the lever housing (30) there is arranged a cover (116), which similarly tightly closes the second chamber (32), and/or in that travel of the valve spindle (6) is preferably detected indirectly by way of the lever (34) or the pivot pin (38) thereof.

4. A servo valve according to Claim 3, characterized in that the plate (115) contains a connection for the overflow air from the position controller (114), the overflow air reaching the enclosed second chamber (32) and the unpressurized part of the diaphragm drive through this connection.

5. A servo valve according to one of Claims 1 to 4, characterized in that in relation to the pivot pin (38) of the lever (34) the lever arm (46) for articulation of the valve spindle (6) is substantially smaller than the lever arm (48) for articulation of the link body (50) connected to the servo drive, and/or in that adjustable travel limiters associated in particular with the lever (34) are provided and are preferably constructed as adjusting screws (91, 92) rotatably arranged in the lever (34) or in the lever housing (30).

6. A servo valve according to one of Claims 1 to 5, characterized in that guide elements (42, 45) and/or a coupling (31) are provided between the lever (34) and the valve spindle (6).

7. A servo valve according to one of Claims 1 to 6, characterized in that the lever housing (30) has a first chamber (31) into which the valve spindle (6) partially projects and which is divided from the second chamber (32) by a dividing wall (122), a guide body (42) coupled both to the valve spindle (6) and to the lever (34) being guided through the dividing wall (122) and being movable in the direction of the spindle axis (8) and guided in relation to the lever housing (30) transverse to the spindle axis (8), preferably by means of a guide bushing (124).

8. A servo valve according to one of Claims 1 to 7, characterized in that the valve spindle (6) engages, in particular by means of a peg (126) and/or by way of a fit, in a bore in the guide body (42), and/or in that the guide body (42) has a centring cone (128) against which there bears a slotted cone nut (130), the latter being screwed onto an external thread (131) of the valve spindle (6) and being braced in relation to the centring cone (128) by means of a coupling (132).

9. A servo valve according to one of Claims 1 to 8, characterized in that the lever housing (30) is directly connected to the valve upper part (4), the lever housing (30) having a flange (98), and/or in that the diaphragm housing (54) contains a lower and an upper housing part (55, 56) which are connected to a clamping band (58) and a turnbuckle (112).

10. A servo valve according to one of Claims 1 to 9, characterized in that biassing of the spring (64) contained in the diaphragm drive is predetermined such that the diaphragm housing (54) may be opened without mounting or safety tools, and/or in that the in particular annular diaphragm (66) is secured to the edge of the diaphragm spring disc (62) by way of a complete ring (68), in particular having a high resistance to stretching, or by means of wires (100) integrated in the inner rim of the diaphragm, and/or in that the diaphragm spring disc (62) has in the outer rim an annular groove (104) and/or a radially outwardly directed protuberance (106) which is arranged on the side not acted upon by the pressurized medium.

11. A servo valve according to one of Claims 1 to 10, characterized in that the valve housing (2) is produced by forging and has downstream of the constriction point a relief chamber (18) of large volume, the relief chamber (18) being surrounded by a substantially cylindrical wall (138) whereof the wall thickness is substantially the same over its height up to the housing rim (136).

12. A servo valve according to one of Claims 1 to 11, characterized in that the housing flange (12) provided for connecting the upper part (4) is arranged spaced from the upper housing rim (136) and/or lies substantially in the centre or in the region of the longitudinal axis (14) of the housing (2) and/or in that the external diameter (139) of the wall (138) is substantially the same size as the edge length (142) of the substantially square housing flange (12).

13. A servo valve according to one of Claims 1 to 12, characterized in that a bellows (26) is provided for sealing the valve spindle (6), and/or in that the bellows (26) is arranged in the valve upper part (4), which has a comparatively short overall length in the direction of the spindle axis (8).

## Revendications

1. Vanne de régulation avec un mécanisme de régulation (51) en particulier en commande pneumatique, au moyen duquel une tige (6) de vanne mobile axialement dans un boîtier (2) de vanne peut être actionnée, et avec un régulateur de position (114) par l'intermédiaire duquel le mécanisme de régulation (51) peut être commandé conformément à la position de la tige (6) de vanne, la tige (6) de vanne étant couplée au mécanisme de régulation (51) par l'intermédiaire d'un levier (34) et d'un corps d'articulation (50),
***caractérisée en ce que*** le levier (34) est monté pivotant dans un boîtier de levier (30), ***en ce que*** le régulateur de position (114) est placé sur le boîtier (30) de levier, et ***en ce que*** le boîtier (30) de levier est relié d'une part au boîtier (2) de vanne et d'autre part au boîtier (54) du mécanisme de régulation (51).

2. Vanne de régulation selon la Revendication 1, ***caractérisée en ce que*** le levier (34) est placé dans une chambre fermée (32) du boîtier (30) de levier et/ou ***en ce que*** dans ladite chambre (32) sont placés deux chevalets (36, 88), dans lesquels le levier (34) est monté pivotant au choix d'une manière correspondant à la direction d'action définissable.

3. Vanne de régulation selon la Revendication 1 ou 2, ***caractérisée en ce que*** le régulateur de position (114) relié directement au boîtier (34) de levier présente une plaque (115) qui ferme hermétiquement la deuxième chambre (32) d'un côté, ***en ce que,*** de l'autre côté du boîtier (30) de levier, il est placé un couvercle (116) fermant également hermétiquement la deuxième chambre (32), et/ou ***en ce que*** la course de la tige (6) de vanne est sondée de préférence indirectement par l'intermédiaire du levier (34) ou de son axe de rotation (38).

4. Vanne de régulation selon la Revendication 3, ***caractérisée en ce que*** la plaque (115) contient un raccord pour le trop-plein d'air du régulateur de position (114), ce raccord permettant au trop-plein d'air d'arriver dans la deuxième chambre fermée (32) ainsi que dans la partie hors pression du mécanisme à membrane.

5. Vanne de régulation selon l'une des Revendications 1 à 4, ***caractérisée en ce que,*** par rapport à l'axe de rotation (38) du levier (34), le bras (46) de levier pour l'articulation de la tige (6) de vanne est largement plus petit que le bras (48) de levier pour l'articulation du corps d'articulation (50) relié au mécanisme de régulation, et/ou ***en ce que*** des limites de course associées en particulier au levier et réglables sont prévues, qui sont conformées de préférence en vis de réglage (91, 92) placées rotatives dans le levier (34) ou dans le boîtier (30) de levier.

6. Vanne de régulation selon l'une des Revendications 1 à 5, ***caractérisée en ce*** qu'entre le levier (34) et la tige (6) de vanne, il est prévu des éléments de guidage (42, 45) et/ou un accouplement (31).

7. Vanne de régulation selon l'une des Revendications 1 à 6, ***caractérisée en ce que*** le boîtier (30) de levier présente une première chambre (31) dans laquelle la tige (6) de vanne dépasse en partie et qui est séparée de la deuxième chambre (32) par une cloison (122), la cloison (122) étant traversée par un corps de guidage (42) couplé à la fois à la tige (6) de vanne et au levier (34), corps qui est mobile dans la direction de l'axe (8) de la tige et passe transversalement à l'axe (8) de la tige par rapport au boîtier de levier (30) de préférence au moyen d'une douille de guidage (124).

8. Vanne de régulation selon l'une des Revendications 1 à 7, ***caractérisée en ce que*** la tige (6) de vanne s'engage en particulier avec un tenon (126) et/ou par l'intermédiaire d'un ajustement dans un perçage du corps de guidage (42) et/ou ***en ce que*** le corps de guidage (42) présente un cône de centrage (128) sur lequel s'appuie un écrou conique fendu (130), ce dernier étant vissé sur un filetage extérieur (131) de la tige (6) de vanne et étant serré à un accouplement (132) par rapport au cône de centrage (128).

9. Vanne de régulation selon l'une des Revendications 1 à 8, ***caractérisée en ce que*** le boîtier (30) de levier est relié directement à la partie de vanne supérieure (4), le boîtier (30) de levier présentant une bride (98) et/ou ***en ce que*** le boîtier (54) de membrane contient une partie de boîtier inférieure et une partie de boîtier supérieure (55, 56) qui sont reliées par une bande de serrage (58) ainsi que par un tendeur (112).

10. Vanne de régulation selon l'une des Revendications 1 à 9, ***caractérisée en ce que*** la précontrainte du ressort (64) contenu dans le mécanisme à membrane est imposée de telle manière que l'ouverture du boîtier (54) de membrane peut se faire sans dispositif de montage ou de sécurité et/ou ***en ce que*** la membrane (66) conformée en particulier en anneau, en particulier de grande rigidité, ou bien au moyen de fils métalliques (100) intégrés dans le bord intérieur de la membrane, est fixée au bord de la coupelle ressort de membrane (62) et/ou ***en ce que*** la coupelle-ressort à membrane (62) présente dans le bord extérieur une rainure annulaire (104) et/ou un nez (106) tourné vers l'extérieur dans le sens radial, qui est placé du côté non exposé au fluide sous pression.

11. Vanne de régulation selon l'une des Revendications 1 à 10, ***caractérisée en ce que*** le boîtier (2) de vanne est fabriqué par forgeage et présente derrière le point d'étranglement une chambre de détente (18) de grand volume, la chambre de détente (18) étant entourée d'une paroi essentiellement cylindrique (138) dont l'épaisseur de paroi est sensiblement constante sur la hauteur jusqu'au bord (136) du boîtier.

12. Vanne de régulation selon l'une des Revendications 1 à 11, ***caractérisée en ce que*** la bride (12) du boîtier prévue pour la liaison de la partie supérieure (4) est placée à distance du bord de boîtier supérieur (136) et/ou se trouve pour l'essentiel au milieu ou au niveau de l'axe longitudinal (14) du boîtier (2) et/ou ***en ce que*** le diamètre extérieur (139) de la paroi (138) est sensiblement aussi grand que la longueur (142) du bord de la bride (12) de boîtier conformée pour l'essentiel carrée.

13. Vanne de régulation selon l'une des Revendications 1 à 12, ***caractérisée en ce qu'un*** soufflet (26) est prévu pour l'étanchéité de la tige (6) de vanne, et/ou ***en ce que*** le soufflet (26) est placé dans la partie de vanne supérieure (4), qui présente une longueur relativement faible dans la direction de l'axe (8) de la tige.
